# EUROPÄISCHE PATENTSCHRIFT

(11) **EP 3 114 473 B1**
(45) Veröffentlichungstag und Bekanntmachung des Hinweises auf die Patenterteilung: **08.04.2020**
(21) Anmeldenummer: 15708505.1
(22) Anmeldetag: 05.03.2015
(51) Int. Cl.: G01N 29/04, G01N 29/27, G01N 29/275, G01N 29/28

(54) **VERFAHREN ZUR PRÜFUNG EINES WERKSTÜCKS MITTELS ULTRASCHALL**
METHOD FOR TESTING A WORKPIECE USING ULTRASOUND
PROCÉDÉ DE CONTRÔLE D'UNE PIÈCE PAR ULTRASONS

(30) Priorität: 07.03.2014 DE 102014103097
(43) Veröffentlichungstag der Anmeldung: 11.01.2017
(73) Patentinhaber: Framatome GmbH, 91052 Erlangen (DE)
(72) Erfinder: UNGERER, Dieter, 90451 Nürnberg (DE); RITTER, Joachim, 91077 Neunkirchen am Brand (DE); GRIPP, Sebastian, 63755 Alzenau (DE)
(74) Vertreter: Lavoix
(86) Internationale Anmeldenummer: PCT/EP2015/054636
(87) Internationale Veröffentlichungsnummer: WO 2015/132343

(56) Entgegenhaltungen:
- WO-A1-2012/062343
- DE-A1-102005 040 180
- US-A- 3 712 119
- US-A1- 2004 020 298
- US-A1- 2009 120 189

## Beschreibung

Die Erfindung betrifft ein Verfahren zur Prüfung eines Werkstücks mittels Ultraschall. Zur zerstörungsfreien Werkstoffprüfung von Werkstücken mit Ultraschall ist es bekannt mittels eines Ultraschallprüfkopfes ein Ultraschallsignal zu erzeugen, das in das zu überprüfende Werkstück entweder direkt über Luft oder mittels eines Flüssigkeitsstrahls, wie bspw. eines Wasserstrahls entlang einer vorgegebenen Bahn auf der Oberfläche des Werkstücks eingekoppelt wird. Bei dieser sogenannten Squirter-Technik wird mittels einer Düse ein Flüssigkeitsstrahl geformt, der dann auf die Oberfläche des Werkstücks gerichtet wird. Um die Einkopplung des Ultraschalls entlang der vorgegebenen Bahn zu erreichen, erfolgt eine Bewegung des Flüssigkeitsstrahls durch eine entsprechende Bewegung der Düse. Die Düse wird dazu über das ortsfeste Werkstück hinweg verfahren, z.B. mittels eines großen beweglichen Portals, synchronisierter Linearachsen oder anderen Einrichtungen mit dem gleichen Zweck wie einer Prüfgabel, auch Joch genannt.

Für die Position der Squirter-Düse liefert die Prüfmechanik eine Position. Prüfmechaniken können sein Portale mit Auslegern, Linearachsen-Systeme oder aber auch Roboter. Der Tool-Center-Point stellt den Strahlauftreffpunkt auf dem zu prüfenden Bauteil dar. Dieser Punkt wird definiert durch die 3-dimensionale Position der Squirter-Düse und dem Abstand zum Bauteil.

Auch können parallel mehrere Squirterdüsen zum Einsatz kommen.

Im Sinne einer möglichst großen Produktivität müssen die Beschleunigung und die Endgeschwindigkeit der Bewegung entlang der Bahn möglichst groß gewählt werden, so dass eine möglichst kurze Prüfdauer erzielt wird. Gleichzeitig wird aber durch Massenträgheit und Luftwiderstand der Flüssigkeitsstrahl abgelenkt. Dies geschieht umso stärker, je größer die Beschleunigung und Endgeschwindigkeit gewählt werden. Diese Ablenkung verschlechtert das Prüfergebnis. Im Extremfall wird die Prüfung unbrauchbar, wenn die Ablenkung des Flüssigkeitsstrahls zu stark wird.

Aus US 2009/120189 A1, US 3,712,119 A und WO 2012/062343 A1 sind herkömmliche Verfahren zur Ultraschallprüfung bekannt, bei denen das Ultraschallsignal mittels eines Direktkontaktes oder eines Kopplungsmediums in das Werkstück eingekoppelt wird. Bei der Ultraschallprüfung bewegt sich das Werkstück relativ zu einem Ultraschallwandler.

US 5,373,743 offenbart ein Verfahren zur Prüfung eines Werkstücks, bei dem ein Ultraschallsignal mittels eines Flüssigkeitsstrahls in ein Werkstück eingekoppelt wird. Der Flüssigkeitsstrahl wird entlang einer Bahn über die Oberfläche des Werkstücks geführt.

Es ist daher Aufgabe der vorliegenden Erfindung ein Verfahren zur Prüfung eines Werkstücks mittels Ultraschall anzugeben, bei dem die vorstehenden Probleme vermieden werden.

Erfindungsgemäß wird diese Aufgabe gelöst durch ein Verfahren mit den Merkmalen des Patentanspruches 1. Demnach wird mit einem Ultraschallprüfkopf ein einen Zentralstrahl aufweisendes Ultraschallsignal erzeugt, das in das zu überprüfende Werkstück mittels mindestens eines Flüssigkeitsstrahls entlang einer vorgegebenen Bahn auf der Oberfläche des Werkstücks eingekoppelt wird und bei dem der Zentralstrahl entlang einer vorgegebenen Bahn auf der Oberfläche des Werkstücks geführt wird, wobei der Zentralstrahl und das Werkstück zumindest auf einem Teilabschnitt der Bahn gegensinnig bewegt werden, z.B. das Bauteil bewegt sich nach rechts und der Zentralstrahl nach links.

Der Zentralstrahl repräsentiert in diesem Fall idealisiert das Ultraschallsignal als linienförmige Darstellung. Dieser Zentralstrahl findet daher seinen Ursprung in dem Ultraschallprüfkopf und trifft punktförmig auf die Oberfläche des Werkstücks. Mit dem Zentralstrahl wird zur Prüfung des Werkstücks die vorgegebene Bahn auf der Oberfläche des Werkstücks abgefahren.

Mit einer gegensinnigen Bewegung von Werkstück und Zentralstrahl ist eine gleichzeitige Bewegung von Werkstück und Zentralstrahl in eine entgegengesetzte Richtung gemeint. Die Geschwindigkeiten der jeweiligen Bewegungen können dabei einen unterschiedlichen Betrag aufweisen, bevorzugt ist dieser aber identisch.

Das Ultraschallsignal wird mittels mindestens eines Flüssigkeitsstrahls in das Werkstück eingekoppelt. Mit dem Zentralstrahl erfolgt somit auch eine gleichzeitige Bewegung des Flüssigkeitsstrahls entlang der vorgegebenen Bahn. Die Bewegung des Werkstücks gegensinnig zur Bewegungsrichtung des Flüssigkeitsstrahls für sich allein betrachtet beeinflusst die Ablenkung des Flüssigkeitsstrahls nicht. Durch die gegensinnigen Bewegungen ergibt sich insgesamt daher eine Addition einerseits der Geschwindigkeit des Werkstücks und andererseits der Geschwindigkeit des bewegten Flüssigkeitsstrahls zu einer Gesamtprüfgeschwindigkeit, wobei aber lediglich die Geschwindigkeit des Flüssigkeitsstrahls maßgeblich für dessen Ablenkung ist. Die gegensinnige bzw. gegenläufige Bewegung von Werkstück und Wasserstrahl erlaubt somit eine erhebliche Steigerung von Beschleunigung und Endgeschwindigkeit der Gesamtprüfgeschwindigkeit und damit der Produktivität bei gleichzeitig gesteigerter Prüfqualität. Dies gilt insbesondere auch für gewölbte Werkstücke.

Der verwendete Flüssigkeitsstrahl kann beispielsweise einen durch eine Lochblende erzeugten kreisrunden oder durch eine längliche Nut erzeugten länglichen Querschnitt aufweisen.

Insbesondere bei einer Mäanderfahrweise, also einer Bewegung von Werkstück und Flüssigkeitsstrahl entlang einer mäanderförmigen Bahn, werden bei einer Richtungsumkehr der Bewegungsrichtungen und der anschließenden Beschleunigungsphase durch die Kombination der Bewegungen von Flüssigkeitsstrahl und Werkstück höhere Gesamtprüfgeschwindigkeiten erzielt. Aber auch bei konstanter Prüfgeschwindigkeit ist bei gleichzeitiger Werkstückbewegung in entgegengesetzter Richtung zur Bewegung des Flüssigkeitsstrahls eine höhere Gesamtprüfgeschwindigkeit möglich. Damit ist eine höhere Produktivität bei gleichzeitig gesteigerter Prüfqualität gegeben. Durch die verringerte Ablenkung, z.B. genannten Einflüssen aus Luftwiderstand und Massenträgheit, und damit Verbiegung des Flüssigkeitsstrahls weichen Auftreffpunkt der Flüssigkeit auf dem Werkstück und dem Tool-Center-Point weniger voneinander ab. Geringere Abweichungen von der Werkstückposition und dem Tool-Center-Point der Prüfmechanik werden erzielt. Die Erhöhung des Strahldruckes erzeugt einen "kräftigeren" Strahl, der weniger stark beeinflusst wird, aber durch die Geometrie und Aufbau der Squirterdüse treten beim Wasserdurchfluss störende Verwirbelungen auf, die wiederum das Prüfergebnis beeinflussen in dem die Signalempfindlichkeit sinkt. Die Genauigkeit der Fehlerbestimmung auf dem Werkstück (Lage und Größe) steigt erheblich.

Eine höhere Positionstreue über das Bauteil wird erreicht. Schnelle Richtungswechsel können bei Mäanderfahrweise am Ende einer z.B. horizontalen Bahn damit ausgesteuert werden. Ein Richtungswechsel muss daher nicht zwingend außerhalb, sondern kann innerhalb des Werkstücks am Werkstückende erfolgen.

Bei einer bevorzugten Ausgestaltung der Erfindung wird das Werkstück mittels Impuls-Echotechnik geprüft. Dies bedeutet, dass nur auf einer Seite des Werkstücks mindestens ein Ultraschallprüfkopf und mindestens eine Düse für den Flüssigkeitsstrahl vorhanden sein müssen. Der Ultraschallprüfkopf dient dabei als Sende- und Empfangseinrichtung.

Alternativ kann auch eine Durchschallung des Werkstücks mit Ultraschall erfolgen, was bedeutet dass Ultraschallprüfköpfe und Düsen zur Formung eines Flüssigkeitsstrahls beidseitig hinsichtlich des Werkstücks angeordnet sind. Auf der einen Seite des Werkstücks befindet sich ein Ultraschallprüfkopf zur Aussendung des Ultraschallsignals und auf der gegenüberliegenden Seite des Werkstücks ein Ultraschallprüfkopf zum Empfangen des Ultraschallsignals.

Eine gegensinnige Bewegung von Zentralstrahl bzw. Flüssigkeitsstrahl und Werkstück erfolgt gemäß der Erfindung mehrdimensional, so dass die oben beschriebenen Vorteile für sämtliche Dimensionen gelten und auch hinsichtlich der Geometrie aufwendige Werkstücke in effizienter Weise geprüft werden können.

Die relativ zum Werkstück gegensinnige Bewegung des Zentralstrahls bzw. Flüssigkeitsstrahls kann bevorzugter Weise durch eine translatorische oder auch durch eine Schwenkbewegung des Ultraschallprüfkopfes bzw. der den Wasserstrahl formenden Düse erfolgen.

Bei einer bevorzugten Ausgestaltung der Erfindung erfolgt die gegensinnige Bewegung von Werkstück und Zentralstrahl bzw. Flüssigkeitsstrahl auf einem Teilabschnitt der Bahn in einem Endbereich des Werkstücks. Auf weiteren Teilabschnitten der Bahn kann dann die Bewegung von Werkstück und Flüssigkeitsstrahl auf herkömmliche Art und Weise erfolgen. Die gegensinnige Bewegung kann sich jedoch auch über das ganze zu prüfende Werkstück erstrecken.

Zur weiteren Erläuterung der Erfindung wird auf die Ausführungsbeispiele der Zeichnung verwiesen. Sie zeigen jeweils in einer schematischen Prinzipskizze:
Fig. 1 eine seitliche Querschnittsansicht einer Prüfanordnung zur zerstörungsfreien Werkstoffprüfung eines Werkstücks,
Fig. 2 eine Draufsicht des Werkstücks aus Fig. 1 mit einer vorgegebenen Bahn entlang derer eine Prüfung des Werkstücks erfolgt,
Fig. 3 die Prüfanordnung von Fig. 1 während einer Prüfsituation,
Fig. 4 die Prüfanordnung aus Fig. 1 während einer weiteren Prüfsituation.

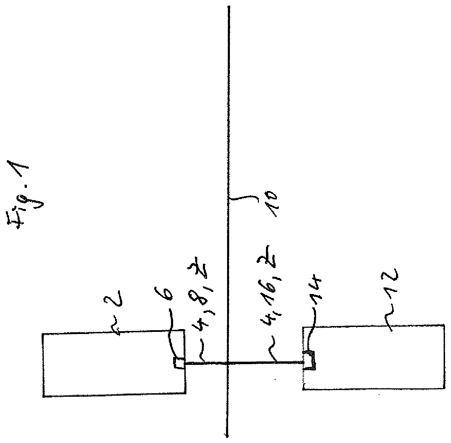

Fig. 1 zeigt eine Vorrichtung zur zerstörungsfreien Werkstoffprüfung, die einen ersten Ultraschallprüfkopf 2 zum Erzeugen eines einen Zentralstrahl (Z) aufweisenden Ultraschallsignals 4 umfasst. An dem Ultraschallprüfkopf 2 ist ferner eine Düse 6 angeordnet, mit der ein Flüssigkeitsstrahl 8 geformt wird. Mittels des Flüssigkeitsstrahls 8 wird das Ultraschallsignal 4 in ein Werkstück 10 eingekoppelt, welches in diesem Fall eine ebene Platte darstellt. Mit der in Fig. 1 gezeigten Prüfanordnung können jedoch auch Werkstücke 10 in nahezu beliebiger weiterer Geometrie geprüft werden.

Auf der dem ersten Ultraschallprüfkopf 2 gegenüberliegenden Seite des Werkstücks 10 ist ein zweiter Ultraschallprüfkopf 12 angeordnet, der ebenfalls eine Düse 14 umfasst, mit der ein Flüssigkeitsstrahl 16 geformt wird, welcher ebenfalls auf das Werkstück gerichtet ist und mit dem das Ultraschallsignal 4 zu dem Ultraschallprüfkopf 12 geleitet wird, nachdem dieses das Werkstück 10 durchschallt hat, so dass dieses durch den Ultraschallprüfkopf 12 empfangen werden kann. Die jeweiligen Abstände der Ultraschallprüfköpfe 2, 12 sowie der Düsen 6, 14 zu dem Werkstück 10 sind vorzugsweise gleich, können jedoch auch unterschiedlich ausgestaltet sein.

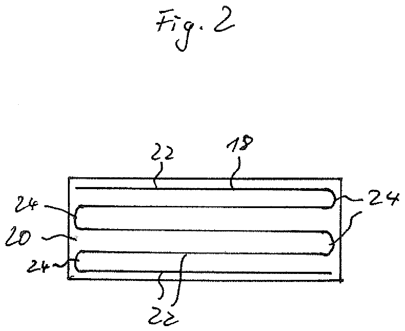

Um eine ausreichende Prüfabdeckung des Werkstücks 10 zu erhalten, erfolgt die Prüfung entlang einer vorgegebenen Bahn 18 auf der Oberfläche 20 des Werkstücks 10, entlang derer das Ultraschallsignal 4 in das Werkstück 10 eingekoppelt werden muss. Der Zentralstrahl (Z) wird deshalb zur Prüfung des Werkstücks 10 entlang dieser Bahn 18 geführt. Eine derartige Bahn 18 ist in Fig. 2 näher dargestellt. Es handelt sich dabei um eine mäanderförmige zweidimensionale Bahn, die mehrere Zeilen 22 und Umkehrpunkte 24 aufweist. Es wäre aber auch möglich mit dem erfindungsgemäßen Verfahren entlang einer dreidimensionalen Bahn 18 das Ultraschallsignal 4 in das Werkstück 10 einzukoppeln. Im Bereich der Umkehrpunkte 24 verläuft die Bahn 18 in diesem Fall bogenförmig. Es können jedoch auch alle weiteren Formen in Frage kommen wie beispielsweise eckig oder zickzack. Die Bereiche der Umkehrpunkte 24 liegen hier auf der Oberfläche des Werkstücks 10. Sie können jedoch auch außerhalb des Werkstücks 10 liegen.

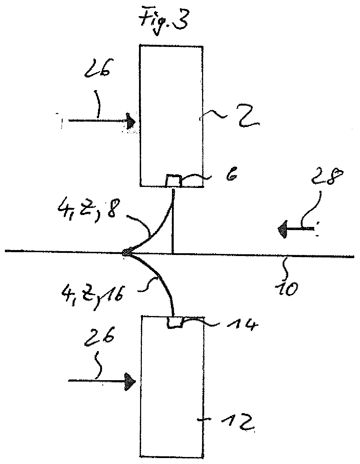

Die Prüfung des Werkstücks 10 erfolgt nun so, wie es in Fig. 3 näher dargestellt ist. Um das Ultraschallsignal 4 in das zu überprüfende Werkstück 10 entlang der Bahn 18 einzukoppeln, werden der Zentralstrahl Z und die Flüssigkeitsstrahlen 8, 16 und das Werkstück 10 zumindest auf einen Teilabschnitt der Bahn 18 gegensinnig bewegt. Um bspw. eine Zeile 22 der Bahn 18 abzufahren, werden der Zentralstrahl Z und die Flüssigkeitsstrahlen 8 sowie 16 in Richtung der Pfeile 26 bewegt, wodurch eine Ablenkung der Flüssigkeitsstrahlen 8 bzw. 16 beispielsweise durch die Massenträgheit in entgegengesetzte Richtung erfolgt. Gleichzeitig wird das Werkstück 10 gegensinnig, also in Richtung des Pfeils 28 bewegt. Kurz vor Erreichen eines Umkehrpunktes 24 werden Werkstück 10 und die Flüssigkeitsstrahlen 8, 16 abgebremst und entlang der Bahn 18 auf eine weitere Zeile 22 verfahren. Es erfolgt dann eine weitere Prüfung entlang der nächsten Zeile 22 mit gegensinnigen Bewegungen von Werkstück 10 und Flüssigkeitsstrahlen 8, 16 in Richtungen jeweils entgegengesetzt zu Pfeilen 26, 28. Die jeweilige Bewegung der Flüssigkeitsstrahlen 8, 16 wird durch eine translatorische Bewegung der entsprechenden Düsen 6, 14 in dieselbe Richtung erzeugt. Der Abstand des Tool-Center-Points zum Strahlauftreffpunkt ist abhängig von den auftretenden Beschleunigungskräften und sollte im Idealfall möglichst klein ausfallen. Eine geringe Auslenkung verbessert die Prüfqualität. Bei großer Auslenkung wird ein weiterer Nachteil offenkundig. Der Strahlauftreffpunkt befindet sich neben dem Tool-Center-Point, der sich auf eine Squirter-Position der Mechanik bezieht. Gerade in diesen speziellen Fällen wird das erfasste Echosignal an einer anderen Position zugeordnet. Gerade bei einer Repositionierung einer Anzeige aus dem Werkstück 10 wird klar, denn dann steht die Squirter-Düse 6, 14 still an einem Ort und der Flüssigkeitsstrahl 8, 16 erfährt keine Auslenkung, dass der Fehler nur teilweise getroffen wird oder gar nicht an dieser Position gesehen wird. Also Fehlerposition ist dann nicht gleich der Squirter-Position.

Das wird insbesondere in einem Bereich um den Umkehrpunkt 24 offensichtlich.

Deswegen ist eine kleinere Fahrgeschwindigkeit der Düse 6, 14 vorteilhaft. Eine Fahrgeschwindigkeit der Squirter-Düse 6, 14 ist üblicherweise gleich zu setzen mit der Squirter-Prüfgeschwindigkeit.

Insbesondere bei einer derartigen Bewegung von Werkstück 10 und Zentralstrahl Z bzw. Flüssigkeitsstrahlen 8, 16 entlang einer mäanderförmigen Bahn 18 werden bei einer Umkehr der Bewegungsrichtungen und der anschließenden Beschleunigungsphase durch die Kombination der Bewegungen von Flüssigkeitsstrahlen 8, 16 und Werkstück 10 höhere Gesamtprüfgeschwindigkeiten erzielt. Aber auch bei konstanter Prüfgeschwindigkeit ist bei gleichzeitiger Werkstückbewegung in entgegengesetzter Richtung zur Bewegung der Flüssigkeitsstrahlen 8, 16 eine höhere Gesamtprüfgeschwindigkeit möglich. Die Gesamtprüfgeschwindigkeit ergibt sich nämlich aus der Addition der einzelnen Beträge der Geschwindigkeiten von Werkstück 10 und Flüssigkeitsstrahlen 8, 16. Dabei muß jedoch nicht zwingend die Geschwindigkeit der Flüssigkeitsstrahlen 8, 16 bzw. Zentralstrahl Z vom Betrag gleich der Geschwindigkeit des Werkstücks sein.

Vorteile liefert diese Vorgehensweise insbesondere bei 3-dimensionalen Werkstückgeometrien. Aber auch bei einer hohen Werkstückmasse mit den einhergehenden Massenträgheitsmomenten kann dies von Vorteil sein, da das Werkstück 10 erst nach mäßiger Beschleunigung danach auf hoher Werkstück-Geschwindigkeit gefahren werden kann.

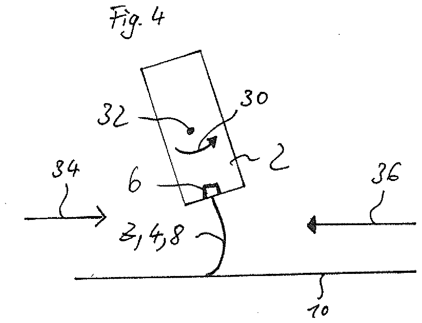

Eine weitere Ausführungsform der Erfindung ist in Fig. 4 dargestellt, bei der das Werkstück 10 mittels Impuls-Echo-Technik geprüft wird. Dies bedeutet, dass lediglich ein einziger Ultraschallprüfkopf 2 vorhanden ist, der ein Ultraschallsignal 4 erzeugt, welcher mittels eines Flüssigkeitsstrahls 8, der von einer Düse 6 geformt wird, in das Werkstück 10 eingekoppelt wird. Das vom Werkstück 10 erzeugte Echo des Ultraschallsignals 4 wird ebenfalls mit dem Ultraschallprüfkopf 2 empfangen. Eine Bewegung des Zentralstrahls Z bzw. des Flüssigkeitsstrahls 8 wird hier ergänzend z.B. mittels einer Schwenk- bzw. Drehbewegung des Ultraschallprüfkopfes 2 bzw. der Düse 6 in Richtung des Pfeils 30 um den Drehpunkt 32 erreicht, so dass der Zentralstrahl Z bzw. Flüssigkeitsstrahl 8 relativ zum Werkstück 10 in Richtung des Pfeils 34 bewegt und das Werkstück 10 selbst in Richtung des Pfeils 36 bewegt wird. Je nach Fahrtrichtung kann das Anstellen des Ultraschallprüfkopfes 2 in oder entgegen der Richtung des Pfeils 30 erfolgen. Bei kurzen Prüfspuren kann ein derartiges Prüfkopfwedeln, mit dem Wechsel der Ausrichtung des Prüfkopfes 2 zum Werkstück 10, vorteilhaft sein. Die unterschiedlichen Bewegungsarten der einzelnen Düsen 6, 14 sind dabei nicht an die Ultraschallprüftechnik gebunden sondern können beliebig kombiniert werden. In besonderem Fall können zwei gegenüberliegende Ultraschallprüfköpfe in Durchschallung zum Einsatz kommen.

### Bezugszeichenliste

- 2: Ultraschallprüfkopf
- 4: Ultraschallsignal
- 6: Düse
- 8: Flüssigkeitsstrahl
- 10: Werkstück
- 12: Ultraschallprüfkopf
- 14: Düse
- 16: Flüssigkeitsstrahl
- 18: Bahn
- 20: Oberfläche
- 22: Zeile
- 24: Umkehrpunkt
- 26: Pfeil
- 28: Pfeil
- 30: Pfeil
- 32: Drehpunkt
- 34: Pfeil
- 36: Pfeil

- Z: Zentralstrahl

## Patentansprüche

1. Verfahren zur Prüfung eines Werkstücks (10) mittels Ultraschall-Squirter-Technik, bei dem mit einem Ultraschallprüfkopf (2, 12) ein einen Zentralstrahl (Z) aufweisendes Ultraschallsignal (4) erzeugt wird, welches mittels mindestens eines Flüssigkeitsstrahles (8, 16) in das zu überprüfende Werkstück (10) eingekoppelt wird und der Zentralstrahl (Z) zusammen mit dem Flüssigkeitsstrahl (8, 16) entlang einer vorgegebenen Bahn (18) auf der Oberfläche (20) des Werkstücks (10) geführt wird, **dadurch gekennzeichnet, dass** der Zentralstrahl (Z) zusammen mit dem Flüssigkeitsstrahl (8, 16) und das Werkstück (10) zumindest auf einem Teilabschnitt der Bahn (18) derart gegensinnig bewegt werden, dass eine mehrdimensionale gegensinnige Bewegung von Zentralstrahl (Z) und Werkstück (10) erfolgt, wobei die gegensinnige Bewegung gleichzeitig und in entgegengesetzter Richtung erfolgt.

2. Verfahren nach Anspruch 1, bei dem das Werkstück (10) mittels Impuls-Echo-Technik geprüft wird.

3. Verfahren nach Anspruch 1, bei dem mindestens eine Durchschallung des Werkstücks (10) mit Ultraschall erfolgt.

4. Verfahren nach einem der vorhergehenden Ansprüche, bei dem eine Bewegung des Zentralstrahls (Z) durch eine translatorische Bewegung des Ultraschallprüfkopfes (2, 12) erfolgt.

5. Verfahren nach einem der vorhergehenden Ansprüche, bei dem eine Bewegung des Zentralstrahls (Z) durch eine Schwenkbewegung des Ultraschallprüfkopfes (2, 12) erfolgt.

6. Verfahren nach einem der vorhergehenden Ansprüche, bei dem die gegensinnige Bewegung auf einem Teilabschnitt der Bahn (18) in einem Endbereich des Werkstücks (10) erfolgt.

7. Verfahren nach einem der vorhergehenden Ansprüche, bei dem die gegensinnige Bewegung sich über das ganze zu prüfende Werkstück (10) erstreckt.

## Claims

1. A method for testing a workpiece (10) by means of ultrasonic squirter technology, in which an ultrasound signal (4) having a central beam (Z) is generated with an ultrasound probe (2, 12), which ultrasound signal by means of at least one liquid jet (8, 16) is coupled into the workpiece (10) to be checked and the central beam (Z) together with the liquid jet (8, 16) is guided along a predetermined path (18) on the surface (20) of the workpiece (10), **characterized in that** the central beam (Z) together with the liquid jet (8, 16) and the workpiece (10) are moved in opposite directions at least on a section of the path (18) in such a manner that a multi-dimensional oppositely directed movement of the central beam (Z) and the workpiece (10) takes place, wherein the oppositely directed movement takes place simultaneously and in the opposite direction.

2. The method according to Claim 1, in which the workpiece (10) is tested by means of impulse echo technology.

3. The method according to Claim 1, in which at least one sound testing of the workpiece (10) is performed with ultrasound.

4. The method according to any one of the preceding claims, in which a movement of the central beam (Z) is carried out by a translational movement of the ultrasound probe (2, 12).

5. The method according to any one of the preceding claims, in which a movement of the central beam (Z) is carried out by a pivotal movement of the ultrasound probe (2, 12).

6. The method according to any one of the preceding claims, in which the oppositely directed movement is carried out on a section of the path (18) in an end region of the workpiece (10).

7. The method according to any one of the preceding claims, in which the oppositely directed movement extends over the entire workpiece (10) to be tested.

## Revendications

1. Procédé de contrôle d'une pièce (10) au moyen d'une technique à ultrasons avec pulvérisation, dans laquelle, avec une tête de contrôle à ultrasons (2, 12), un signal à ultrasons (4) comprenant un faisceau central (Z) est généré, qui est entré à l'aide d'au moins un jet de liquide (8, 16) dans la pièce à contrôler (10) et le faisceau central (Z) est guidé, conjointement avec le jet de liquide (8, 16), le long d'une trajectoire (18) prédéterminée, sur la surface (20) de la pièce (10), **caractérisé en ce que** le faisceau central (Z) est déplacé conjointement avec le jet de liquide (8, 16) et la pièce (10) est déplacée au moins sur une partie de la trajectoire (18) à contre-sens de façon à obtenir un déplacement multidimensionnel à contre-sens du faisceau central (Z) et de la pièce (10), le déplacement à contre-sens ayant lieu simultanément et dans une direction opposée.

2. Procédé selon la revendication 1, dans lequel la pièce (10) est contrôlée au moyen d'une technique à échos impulsionnels.

3. Procédé selon la revendication 1, dans lequel au moins un sondage acoustique de la pièce (10) est effectuée avec des ultrasons.

4. Procédé selon l'une des revendications précédentes, dans lequel un déplacement du faisceau central (Z) a lieu grâce à un déplacement en translation de la tête de contrôle à ultrasons (2, 12).

5. Procédé selon l'une des revendications précédentes, dans lequel un déplacement du faisceau central (Z) a lieu grâce à un pivotement de la tête de contrôle à ultrasons (2, 12).

6. Procédé selon l'une des revendications précédentes, dans lequel le déplacement à contre-sens a lieu sur une partie de la trajectoire (18) dans une zone d'extrémité de la pièce (10).

7. Procédé selon l'une des revendications précédentes, dans lequel le déplacement à contre-sens s'étend sur toute la pièce à contrôler (10).
